# DEMANDE DE BREVET EUROPEEN

(11) **EP 4 715 487 A1**
(43) Date de publication de la demande: **25.03.2026**
(21) Numéro de dépôt: 24201470.2
(22) Date de dépôt: 19.09.2024
(51) Int. Cl.: G04C 3/10, G04C 3/14, G04C 3/16, G04C 10/00

(54) **MONTRE MUNIE D'UNE GÉNÉRATRICE MÉCANO-ÉLECTRIQUE**

(71) Demandeur: The Swatch Group Research and Development Ltd, 2074 Marin (CH)
(72) Inventeur: TORTORA, Pierpasquale, 2000 Neuchâtel (CH); NICOLAS, Cédric, 2000 Neuchâtel (CH); HINAUX, Baptiste, 1003 Lausanne (CH); BORN, Jean-Jacques, 1110 Morges (CH)
(74) Mandataire: ICB SA

(57) **Abrégé**

L'invention concerne une montre comprenant, dans une boîte (6b), un mouvement (44a) et une génératrice mécano-électrique (88), laquelle comprend un stator (106a, 106b, 18a, 18b) et un rotor (92), l'un portant des aimants permanents (18a, 18b) et l'autre des bobines (14). Le rotor présente une structure annulaire et est guidé en rotation par au moins un roulement à billes (100a), le rotor présentant sur toute sa hauteur un espace intérieur libre (130) qui est traversé par l'axe géométrique de rotation de ce rotor et dans lequel est situé au moins partiellement le mouvement. Dans un mode de réalisation principal, la montre comprend un barillet formant un dispositif d'entrainement du rotor qui peut être activé sur commande. Dans une variante principale, la montre comprend un dispositif d'éclairage (64) qui est alimenté par les bobines. Dans une variante avantageuse, le rotor (92) porte les bobines, lesquelles sont connectées, via un circuit électrique sans accumulateur, au dispositif d'éclairage qui est agencé fixement sur le rotor.

## Description

### Domaine technique de l'invention

La présente invention concerne une montre incorporant une génératrice mécano-électrique. En particulier, l'invention concerne une montre munie d'un mouvement mécanique, c'est-à-dire dont l'entraînement d'un affichage analogique de l'heure est entièrement mécanique, avec un barillet comme source d'énergie.

En particulier, l'invention concerne une telle montre munie d'un dispositif d'éclairage d'un espace d'affichage, dans lequel est situé un dispositif d'affichage analogique, ce dispositif d'éclairage étant alimenté par la génératrice mécano-électrique.

### Arrière-plan technologique

Sur le marché on a déjà eu des montres du type mécanique avec divers systèmes d'éclairage additionnels. Dans une réalisation particulière, divulguée dans le document EP 3838424, un dispositif d'éclairage est alimenté par une micro-génératrice, aussi nommée 'génératrice', dont la rotation est assurée par un ressort de barillet et qui sert de régulateur de vitesse pour un dispositif de sonnerie. Les bobines de la micro-génératrice sont portées par son stator alors que le rotor porte classiquement des aimants permanents.

Concernant la micro-génératrice, on remarque que celle-ci ainsi que le circuit électrique et le circuit électronique, qui lui sont associés, sont agencés entièrement à l'intérieur du mouvement horloger et occupent un espace relativement important de ce mouvement. Dans le cas où il est prévu de montrer le mouvement horloger au travers d'un verre agencé dans le fond de la boîte de montre, au moins la génératrice est bien visible. Ceci donne un caractère hybride, mécanique et électrique, au mouvement horloger, ce qui n'est pas favorable notamment dans le cas d'une montre haut de gamme dont la valeur réside substantiellement dans le mouvement horloger mécanique. Ensuite, l'espace significatif occupé par la génératrice dans le mouvement augmente le volume de celui-ci. De plus, la génératrice présente une hauteur relativement importante car le rotor comprend sur au moins un disque une pluralité d'aimants, lesquels sont axialement superposés à des bobines du stator, et un arbre central portant ledit au moins un disque, cet arbre central étant pivoté à ses deux extrémités dans des supports du mouvement, par exemple dans une platine et un pont de génératrice.

On notera également que le système d'éclairage prévu présente des inconvénients pour une montre munie d'un mouvement mécanique, en particulier pour une montre haut de gamme pour laquelle il est important de conserver le plus possible le caractère exclusivement mécanique du mouvement. En effet, le système d'éclairage comprend au moins un élément électroluminescent, par exemple au moins une LED, un circuit électrique, un circuit électronique et au moins un accumulateur d'énergie électrique qui sont agencés sur un support dans le mouvement horloger, à la périphérie du rotor de la micro-génératrice, ce qui introduit un dispositif du type électronique et des moyens de stockage d'énergie électrique dans le mouvement horloger.

### Résumé de l'invention

L'invention a pour premier objectif de fournir une montre équipée d'une génératrice mécano-électrique qui apporte une solution aux divers problèmes susmentionnés concernant une micro-génératrice incorporée dans le mouvement de la montre (ci-après nommée 'génératrice mécano-électrique' ou simplement 'génératrice').

L'invention a pour deuxième objectif de fournir une montre équipée d'une génératrice mécano-électrique et d'un dispositif d'éclairage qui apporte une solution aux divers inconvénients susmentionnés concernant le système d'éclairage.

L'invention a pour troisième objectif de proposer un dispositif d'éclairage d'un affichage analogique de la montre, en particulier des aiguilles et du cadran, qui soit esthétique, discret et approprié à une montre haut de gamme, et qui en plus ne nécessite pas d'agencer des moyens optiques spécifiques dans les éléments de l'affichage analogique lui-même, en particulier dans le cadran.

A cet effet, la présente invention concerne premièrement une montre comprenant un mouvement, une génératrice mécano-électrique et une boîte incorporant le mouvement et la génératrice mécano-électrique, cette génératrice comprenant un stator et un rotor, l'un portant des aimants permanents et l'autre des bobines, les aimants permanents et les bobines étant agencés de manière que, lorsque le rotor est entraîné en rotation, les aimants permanents passent, dans un référentiel lié aux bobines, successivement en face de chaque bobine avec leurs axes magnétiques respectifs traversant la bobine. Le rotor présente une structure annulaire et est guidé en rotation par au moins un roulement à billes, le rotor présentant sur toute sa hauteur un espace intérieur libre, lequel est traversé par l'axe géométrique de rotation de ce rotor et dans lequel est situé au moins partiellement le mouvement.

Selon une variante avantageuse, le rotor de la génératrice mécano-électrique est situé sensiblement entièrement, de préférence entièrement, dans un espace périphérique au mouvement. Par 'entièrement dans un espace périphérique', on comprend que le mouvement est compris dans un volume géométrique qui suit intérieurement ses surfaces latérales extérieures et que le rotor ne pénètre pas dans ce volume, à l'exception éventuellement d'une denture intérieure du rotor qui engrène avec une roue d'un dispositif d'entrainement mécanique de la génératrice lorsque ce dispositif d'entrainement mécanique est compris dans le mouvement. On notera que, dans un mode de réalisation particulier qui ne sera pas décrit, le dispositif d'entrainement mécanique du rotor peut être distinct du mouvement et situé dans la boîte de montre hors du volume du mouvement. Selon une variante préférée, de plus, le stator de la génératrice mécano-électrique est situé sensiblement entièrement, de préférence entièrement, dans un espace périphérique au mouvement. Concernant le stator, on comprend ici par 'sensiblement entièrement dans un espace périphérique' le fait que les bobines sont sensiblement hors du volume du mouvement, mais une partie du support des bobines peut éventuellement pénétrer dans ce volume, notamment pour sa fixation au mouvement.

Dans une variante de réalisation avantageuse, la dimension axiale de la génératrice mécano-électrique est inférieure à la dimension axiale du mouvement.

Dans un mode de réalisation avantageux, la montre comprend une pluralité de roulements à billes dont le diamètre est inférieur au rayon intérieur du rotor, de préférence à la moitié de ce rayon. Chaque roulement à billes de ladite pluralité comprend une partie fixe et une partie mobile passant entre la partie fixe et le rotor, chaque partie mobile et le rotor étant configurés de manière que le rotor est supporté seulement par la pluralité des parties mobiles de la pluralité de roulements à billes et est capable de tourner autour de l'axe géométrique de rotation du rotor.

Dans un premier mode de réalisation principal, le rotor comprend un balourd permettant un actionnement en rotation libre de ce rotor par des mouvements effectués par un utilisateur de la montre ; et en ce que les bobines sont connectées à un accumulateur électrique via un redresseur.

Dans un deuxième mode de réalisation principal, la montre comprend un dispositif mécanique d'entrainement du rotor, ce dispositif mécanique d'entrainement comprenant un barillet et étant agencé de manière à pouvoir être activé sur commande par un utilisateur de la montre.

Dans un mode de réalisation avantageux, la montre comprend un dispositif d'éclairage qui est alimenté par les bobines. Dans une variante préférée de ce mode de réalisation, le rotor porte les bobines, lesquelles sont connectées, directement ou via un circuit électrique sans accumulateur et le cas échéant un circuit électronique, audit dispositif d'éclairage qui est agencé fixement sur le rotor.

### Brève description des figures

L'invention sera décrite ci-après de manière plus détaillée à l'aide des dessins annexés, donnés à titre d'exemples nullement limitatifs, dans lesquels :
- la figure 1 est une coupe partielle d'une montre selon un premier mode de réalisation principal de l'invention ;
- la figure 2 est une coupe partielle d'une montre selon un deuxième mode de réalisation principal de l'invention ;
- la figure 3 est une coupe horizontale, selon la ligne III-III des figures 4 et 5, d'une montre selon un mode de réalisation avantageux pour une utilisation de la génératrice mécano-électrique comme source d'énergie pour un dispositif d'éclairage d'un espace d'affichage de la montre ;
- la figure 4 est une coupe partielle, selon la ligne de coupe IV-IV, de la montre de la figure 3 ; et
- la figure 5 est une coupe partielle, selon la ligne de coupe V-V, de la montre de la figure 3.

### Description détaillée de l'invention

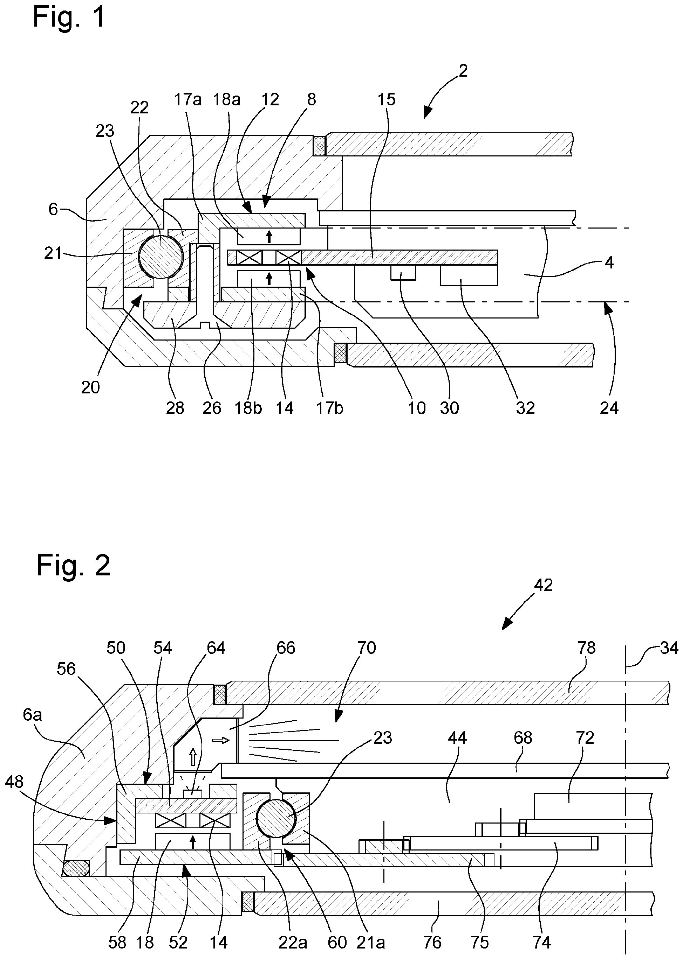

En référence à la figure 1, on décrira ci-après un premier mode de réalisation principal d'une montre selon l'invention.

La montre 2 comprend un mouvement 4, une génératrice mécano-électrique 8 et une boîte 6 incorporant le mouvement et la génératrice mécano-électrique. La génératrice 8 comprend un stator 10 et un rotor 12, le rotor portant des aimants permanents 18a, 18b et le stator des bobines 14. De manière générale, les aimants permanents et les bobines sont agencées de manière que, lorsque le rotor est entraîné en rotation, les aimants passent, dans un référentiel lié aux bobines, successivement au moins partiellement en face de chaque bobine avec leurs axes magnétiques respectifs (indiqué aux figures par des flèches) traversant la bobine. Selon l'invention, le rotor 12 présente une structure annulaire et est guidé en rotation par au moins un roulement à billes 20. De plus, le rotor présente sur toute sa hauteur un espace intérieur libre 24, lequel est traversé par l'axe géométrique de rotation (semblable à l'axe 34 visible à la figure 2) de ce rotor et dans lequel est situé au moins partiellement le mouvement 4.

Dans la variante avantageuse du premier mode de réalisation principal montrée à la figure 1, le rotor 12 a une structure ferromagnétique, formées ici en deux parties annulaires 17a et 17b, dont la section transversale définit une forme générale en C (ou plus exactement en U ayant des portions rectilignes). Plus précisément, la partie 17a présente une forme en L et porte une première série d'aimants permanents 18a, situés au-dessus des bobines 14, et la partie 17b est rectiligne et porte une deuxième série d'aimants permanents 18b situés en-dessous des bobines 14. Ainsi, les bobines 14 sont avantageusement situées entre des paires d'aimants de même polarité et alignés axialement, les axes magnétiques des aimants étant aussi axiaux. Pour limiter l'épaisseur de la génératrice et permettre aisément que les aimants de chaque paire soient à égale distance des bobines, ces dernières sont situées dans des ouvertures d'un support 15, formant éventuellement un PCB, auquel les bobines sont fixées. Les bobines 14 et les paires d'aimants 18a, 18b sont agencées circulairement avec comme axe central l'axe de rotation du rotor. Dans une première variante, le nombre d'aimants de chaque série d'aimants est égal au nombre de bobines prévues, le nombre d'aimants étant, de manière non-limitative, prévu avantageusement entre vingt-quatre et quarante-huit. Dans ce cas, tous les aimants présentent une même polarité (même sens de leur polarisation). Dans une deuxième variante, la génératrice a deux fois plus d'aimants par série d'aimants, et donc de paires d'aimants que de bobines. Dans ce dernier cas, les aimants de chaque série d'aimants, respectivement les paires d'aimants présentent des polarités alternées.

Dans la variante représentée à la figure 1, il est prévu un seul roulement à billes 20 qui est formé d'une partie annulaire fixe 21 et d'une partie annulaire mobile 22 entre lesquelles sont situées les billes 23. Dans cette variante, la partie annulaire mobile 22 forme une partie du rotor 12. Dans une première variante (celle représentée à la figure 1), la partie fixe 21 du roulement à billes 20 est située du côté extérieur du rotor 12 et fixée à la boîte 6. Le rotor de la génératrice mécano-électrique 8 est situé entièrement dans un espace périphérique au mouvement 4, ce qui est avantageux car ce rotor n'encombre pas le mouvement et cette réalisation permet d'avoir le rotor et les bobines du stator hors du volume cylindrique qui s'élève axialement du verre inférieur de la boîte 6. Seul le support 15 des bobines 14 peut, selon la variante prévue, pénétrer en partie dans ce volume cylindrique. Par 'espace périphérique', on comprend l'espace entourant latéralement le volume géométrique défini par le mouvement 4, à savoir par l'ensemble de ses surfaces extérieures.

Pour monter la génératrice 8 dans la boîte 6 de la montre 2, il est prévu d'introduire premièrement le roulement à billes 20 avec la partie supérieure 17a du rotor, portant les aimants supérieurs 18a, dans la boîte depuis le côté du fond de cette boîte par l'ouverture inférieure de sa carrure (le fond étant enlevé pour le montage de la génératrice et du mouvement) et on assemble la partie annulaire fixe 21 à la boîte 6. A noter que la partie supérieure 17a est fixée au préalable à la partie annulaire mobile 22 du roulement à billes. Ensuite, on introduit le mouvement 4 et le stator 10 dans la boîte également par ladite ouverture inférieure, éventuellement aussi avec un cadran, et on fixe le mouvement dans la boîte. On remarquera que le stator peut être fixé au préalable au mouvement ou être fixé à ce mouvement après le montage de celui-ci dans la boîte 6. Dans une variante non représentée, le stator est fixé à un cercle d'encageage du mouvement 4. Finalement, on apporte la partie inférieure 17b du rotor avec les aimants 18b et on fixe cette partie inférieure 17b à la partie supérieure 17a pour former le rotor 12 et un circuit magnétique reliant les aimants 18a aux aimants 18b. Cette fixation est réalisée par des vis 26 qui sont vissées dans des tubes filetés qui sont solidaires de la partie annulaire mobile 22 et de la partie supérieure 17a du rotor. On remarquera que la partie inférieure 17b s'étend radialement au-delà de la partie supérieure 17a pour assurer une fixation rigide et stable de ces deux parties.

Le premier mode de réalisation principal concerne une montre dans laquelle la génératrice mécano-électrique 8 est une source d'énergie électrique prévue pour transformer de l'énergie mécanique provenant des mouvements du bras d'un utilisateur en énergie électrique qui est stockée dans la montre pour pouvoir ensuite alimenter au moins un dispositif ou système électrique et/ou électronique incorporé dans la montre. A cet effet, le rotor 12 porte un balourd 28. On peut aussi dire que le rotor comprend un balourd 28 étant donné que ce balourd est fixé au rotor et tourne avec lui. Ce balourd s'étend par exemple sur une distance angulaire de 180°. Ainsi, le balourd permet un actionnement en rotation du rotor 12 par des mouvements effectués par un utilisateur de la montre. Pour accumuler l'énergie électrique produite par la génératrice 8, les bobines 14 sont connectées à un accumulateur électrique 32 via un redresseur 30. Ces éléments électriques 30 et 32 sont agencés, dans la variante représentée, sur le support 15 du stator 10, ce support formant un PCB par lequel les bobines, agencées avantageusement en série, sont connectées au redresseur qui redresse le signal électrique sinusoïdal fourni par la génératrice pour permettre une accumulation de l'énergie électrique dans l'accumulateur 32, notamment une batterie rechargeable.

On notera que le PCB 15 pénètre en partie dans le mouvement 4. Ainsi, la génératrice mécano-électrique est située sensiblement entièrement dans un espace périphérique au mouvement. Dans une première variante, le PCB formant le stator 10 et portant les éléments électriques est entièrement situé à la périphérie du mouvement, fixé au mouvement ou alternativement à la boîte de montre ou à un cercle d'encageage. Dans une deuxième variante, deux extrémités de la pluralité de bobines reliées en série sont connectées par des deux fils ou par un connecteur souple ou par un autre type de connecteur électrique à deux plages électriques d'un PCB sur lequel sont agencés les éléments électriques 30 et 32, ce PCB étant distinct du support qui forme le stator 10 et qui est situé entièrement à la périphérie du mouvement 4. Dans la première variante et la deuxième variante, le stator et ainsi la génératrice sont situés entièrement dans un espace périphérique au mouvement, de sorte que le mouvement est distinct de la génératrice, cette dernière étant périphérique au mouvement qui est situé à l'intérieur de cette génératrice.

En référence à la figure 2, on décrira ci-après un deuxième mode de réalisation principal d'une montre selon l'invention.

La montre 42 selon le deuxième mode de réalisation principal de l'invention se distingue du premier mode de réalisation principal en premier lieu par le fait que le rotor 52 de la génératrice mécano-électrique 48 est entraîné, sur commande, par un rouage (formé des roues 74, 75) depuis un barillet 72 du mouvement 44, ce barillet stockant de l'énergie mécanique, par un remontage manuel ou automatique via une masse oscillante, et étant dédié à un dispositif d'éclairage de la montre dont la source d'énergie électrique est la génératrice 48. De manière générale, la montre comprend un dispositif mécanique d'entrainement du rotor, ce dispositif mécanique d'entrainement comprenant un barillet et étant agencé de manière à pouvoir être activé sur commande par un utilisateur de la montre pour entrainer le rotor de la génératrice et produire ainsi de l'énergie électrique.

La génératrice 48 comprend un stator 50 et un rotor 52, le rotor portant des aimants permanents 18 et le stator portant des bobines 14. Les aimants permanents et les bobines sont agencés de manière que, lorsque le rotor est entraîné en rotation, les aimants permanents passent, dans un référentiel lié aux bobines, successivement au moins partiellement en face de chaque bobine avec leurs axes magnétiques respectifs traversant la bobine. Selon l'invention, le rotor 52 présente une structure annulaire et est guidé en rotation par un roulement à billes 60. Le rotor 52 présente sur toute sa hauteur un espace intérieur libre qui est traversé par l'axe géométrique de rotation 34 de ce rotor et dans lequel est situé partiellement le mouvement 44. Le rotor 52 de la génératrice mécano-électrique est situé entièrement dans un espace périphérique au mouvement. Dans la variante avantageuse représentée, le stator 50 de la génératrice mécano-électrique 48 est aussi situé entièrement dans un espace périphérique au mouvement 44. De plus, la dimension axiale de la génératrice mécano-électrique 48 est inférieure à la dimension axiale du mouvement 44. L'incorporation de la génératrice 48 dans la montre 42 n'augmente pas son épaisseur. De plus son montage dans la boîte 6a est aisé et l'espace au-dessus du mouvement 44 n'est pas encombré par la génératrice. Cette dernière caractéristique est particulièrement utile dans le cas de la montre 42, laquelle comprend un dispositif d'éclairage de l'espace d'affichage 70, situé entre le cadran 68 et le verre supérieur 78, depuis la périphérie de cet espace 70 (ce dispositif d'éclairage sera décrit plus en détails par la suite).

Le roulement à billes 60 est formé d'une partie fixe 21a et d'une partie mobile 22a entre lesquelles sont situées les billes 23, la partie mobile étant annulaire et formant une partie du rotor 52 ou, en d'autres termes, étant solidaire du rotor. La variante représentée est caractérisée par le fait que la partie fixe 21a du roulement à billes 60 est située du côté intérieur du rotor 52 et est fixée au mouvement 44. En particulier, la partie fixe 21a forme un anneau qui encercle le mouvement 44, par exemple dans sa zone médiane comme représenté à la figure 2. Seule la roue 75 du dispositif d'entrainement du rotor passe en-dessous du roulement à billes 60 et engrène avec la denture intérieure du rotor, laquelle est usinée en bordure intérieur d'un anneau ferromagnétique 58 formant le rotor 52 et portant les aimants permanents bipolaires 18. L'anneau 58 est solidaire de la partie mobile 22a du roulement à billes 60 et il forme avec une partie annulaire ferromagnétique 56 du stator 50 un circuit magnétique de fermeture des champs magnétiques engendrés par les aimants 18, de sorte qu'ils traversent de manière optimale les bobines 14. La partie annulaire 56 du stator a une section transversale en L et est fixée à la boîte 6a. La partie annulaire 56 porte un PCB annulaire 54, agencé sous sa partie horizontale, sous lequel sont agencées les bobines 14 en face des aimants 18. A titre d'exemple non limitatif, le PCB 54 porte entre vingt et quarante bobines réparties régulièrement autour de l'axe de rotation 34. Le rotor 52 porte un même nombre d'aimants de même polarité ou le double d'aimants avec des polarités alternées, ces aimants étant répartis régulièrement sur l'anneau 58. La génératrice 48 se distingue de la génératrice 8 du premier mode de réalisation principalement par le fait que le rotor 52 porte une seule série d'aimants agencés dans un même plan géométrique perpendiculaire à l'axe de rotation 34, ces aimants étant ainsi tous d'un même côté des bobines 14.

Ensuite, le deuxième mode de réalisation principal se distingue du premier mode de réalisation principal par le fait que le dispositif d'éclairage de la montre est alimenté sensiblement en temps réel par la génératrice 48 (plus précisément par les bobines 14 de la génératrice 48 lorsque le rotor 52 tourne à une vitesse supérieure à une valeur minimale donnée), directement ou au travers d'un circuit électrique et/ou électronique sans accumulateur d'énergie électrique, un tel circuit ayant éventuellement au moins une capacité de lissage en matériau solide (une telle capacité de lissage n'étant pas un accumulateur d'énergie électrique car ne stockant pas de l'énergie). Le circuit électrique et/ou électronique peut comprendre notamment un redresseur à pont de Graetz.

Dans la variante représentée, le dispositif d'éclairage est formé d'une pluralité de diodes électroluminescentes 64 (LEDs 64) et d'une structure annulaire guide de lumière 66 formant un rehaut de la montre. Le stator 50 porte les bobines, lesquelles sont connectées, directement ou via un circuit électrique sans accumulateur et le cas échéant un circuit électronique, à la pluralité de diodes électroluminescentes 64 agencées électriquement en parallèle. Le dispositif d'éclairage est agencé de préférence sur le stator, le PCB annulaire 54 portant d'un côté les bobines 14 et de l'autre côté les LEDs 64. Le PCB porte en outre les diverses connexions électriques et tout circuit électrique et/ou électronique prévu. A titre d'exemple non limitatif, le nombre de LEDs est prévu entre six et dix-huit, ces LEDs étant réparties angulairement de manière régulière. On remarquera que les LEDS sont situées dans des ouvertures traversantes de la partie annulaire ferromagnétique 56 prévues en regard de la structure annulaire guide de lumière 66. La structure annulaire guide de lumière 66 présente une surface d'injection de la lumière produite par les LEDs, cette surface d'injection étant située au-dessus des LEDs, et une surface cylindrique d'extraction de cette lumière définissant l'espace d'affichage 70 et permettant à la lumière de sortir du guide de lumière pour pénétrer dans cet espace d'affichage.

Dans ce deuxième mode de réalisation, le mouvement 44 peut avantageusement être du type mécanique (sans éléments électriques ou électroniques). Tous les éléments électriques et électroniques que comporte la montre sont agencés à la périphérie du mouvement mécanique 44, en particulier la génératrice 48 et le dispositif d'éclairage 64 de l'espace d'affichage 70. Le verre inférieur 76 ne laisse apparaître aucun élément électrique ou électronique, et même aucun aimant permanent de la génératrice (à noter qu'on reconnaît dans le domaine horloger comme non électrique / électronique des aimants permanents pouvant être incorporés). Dans une première variante, le roulement à billes 60 est fixé à un cercle d'encageage du mouvement mécanique 44. Dans une deuxième variante, le roulement à billes est agencé, comme dans la variante du premier mode de réalisation qui a été décrite, du côté extérieur du rotor et fixé à la boîte 6a.

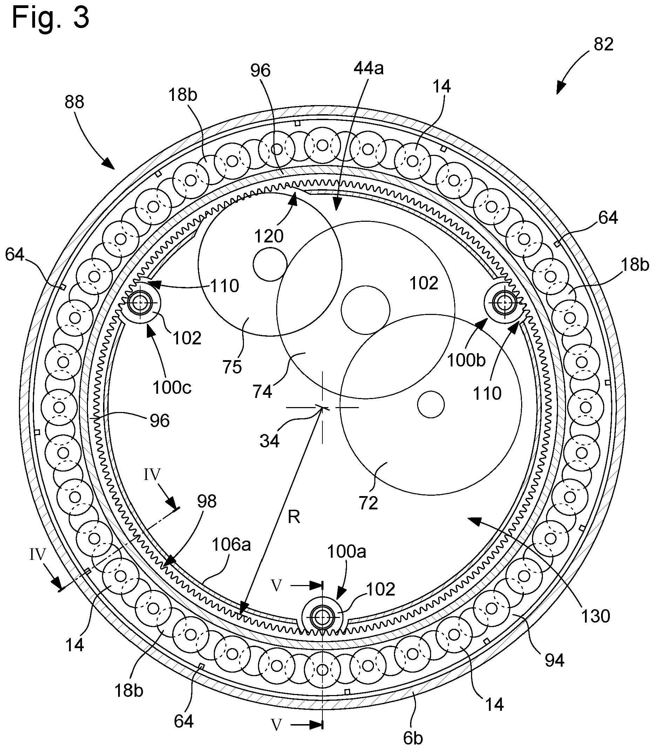

En référence aux figures 3 à 5, on décrira ci-après un mode de réalisation avantageux de l'invention pour une montre comprenant un dispositif d'éclairage d'un espace d'affichage qui est alimenté par une génératrice mécano-électrique. Diverses caractéristiques de l'invention déjà présentées précédemment ne seront pas toutes décrites à nouveau, mais on présentera en premier lieu les éléments distinctifs de ce mode de réalisation avantageux.

La montre 82 comprend une boîte 6b qui incorpore un mouvement 44a (représenté que partiellement à la figure 3, il est situé entre le cadran 68 et le fond de la boîte) et une génératrice mécano-électrique 88 située dans une région périphérique au mouvement. La génératrice 88 comprenant un stator 90 et un rotor 92, lequel présente une structure annulaire et est guidé en rotation, selon une première caractéristique principale de ce mode de réalisation avantageux, par au moins deux roulement à billes, de préférence au moins trois roulements à billes 100a, 100b, 100c. De manière générale, la montre 82 comprend une pluralité de roulements à billes dont le diamètre est inférieur au rayon intérieur R du rotor, de préférence inférieur à la moitié de ce rayon intérieur. Chaque roulement à billes de ladite pluralité comprend une partie fixe 101 et une partie mobile 102 passant entre la partie fixe et le rotor 92, chaque partie mobile et le rotor étant configurés de manière que le rotor est supporté seulement par la pluralité des parties mobiles de la pluralité de roulements à billes et est capable de tourner autour de l'axe géométrique central 34 du rotor qui est son axe de rotation. Chaque roulement comprend, de manière classique, des billes 103 entre sa partie fixe et sa partie mobile. Ce qui est particulier ici relativement aux modes de réalisation précédents, c'est que la partie mobile des roulements à billes n'est pas solidaire du rotor annulaire périphérique 92 et ne fait donc pas partie de ce rotor. Les parties mobiles roulent le long d'une piste 97 usinée latéralement dans une partie intérieure 96 du rotor.

La piste 97 présente par exemple un profil, dans une section transversale, définissant trois segments linéaires dont les dimensions sont prévues pour que chaque partie mobile 102 présente un petit jeu dans la rainure formant ladite piste et soit en contact le long dudit profil, selon l'orientation spatiale de la montre, en un point ou deux points. De préférence, dans ce mode de réalisation avantageux, chaque roulement à billes est situé du côté intérieur du rotor et chaque partie fixe est montée dans le mouvement 44a. Dans une variante, les parties fixes 101 sont montées sur un cercle d'encageage du mouvement. Le rotor 92 présente une denture intérieure 98 qui engrène avec une roue 75 d'un rouage d'entrainement (roues 74 et 75) agencé entre un barillet 72 et le rotor. Le mécanisme d'entrainement de la génératrice est prévu pour pouvoir entrainer sur commande la génératrice de manière contrôlée, notamment avec une vitesse angulaire de rotation supérieure à une vitesse minimale nécessaire au bon fonctionnement du dispositif d'éclairage prévu, selon l'agencement de génératrice 88, tant que le barillet est remonté / armé au-dessus d'un seuil inférieur.

Comme dans les autres modes de réalisation, le rotor 92 présente sur toute sa hauteur un espace intérieur libre 130, lequel est traversé par l'axe géométrique 34 de rotation de ce rotor et dans lequel est situé partiellement le mouvement 44a. Ensuite, le rotor 92 est situé sensiblement entièrement dans un espace périphérique au mouvement. De fait, dans la variante représentée, seuls les trois roulements à billes associés au rotor et supportant ce dernier, en le laissant libre en rotation, ainsi que la roue d'entrainement 75, qui engrène avec la denture intérieure 98 du rotor, sont en contact avec le rotor 92 mais situés à l'intérieur de ce dernier. On peut donc dire que, dans la variante représentée, le rotor est situé entièrement dans un espace périphérique au mouvement 44a. De plus, le stator 90 de la génératrice est également situé sensiblement entièrement dans un espace périphérique au mouvement. De fait, si on ne considère pas les évidements 110 et 120 effectués dans le stator comme englobés dans le volume propre du stator, on peut dire le stator 90 est aussi situé entièrement dans un espace périphérique au mouvement. Par conséquent, la génératrice mécano-électrique est agencée sensiblement entièrement, de préférence entièrement dans un espace périphérique au mouvement de la montre. Ainsi, dans la variante représentée, le mouvement est situé sensiblement entièrement à l'intérieur de la génératrice 88, dans un volume intérieur de cette génératrice qui est défini par le stator 90, de fait entièrement dans ce volume intérieur selon ce qui a été exposé ci-avant et la hauteur de cette génératrice dans la variante représentée.

Selon une deuxième caractéristique principale du mode de réalisation avantageux décrit ici, le rotor 92 porte les bobines 14, lesquelles sont connectées, directement ou via un circuit électrique sans accumulateur et le cas échéant un circuit électronique, à un dispositif d'éclairage, formé d'une pluralité de diodes électroluminescentes 64 (LEDs 64), qui est agencé fixement sur le rotor. Plus précisément, le rotor comprend un support annulaire 94, formant un PCB rigide (acronyme de 'Printed Circuit Board'), qui présente des ouvertures circulaires dans lesquelles sont situées les bobines 14, lesquelles sont fixées solidement au support annulaire 94 qui est lui-même porté par la partie intérieure 96 du rotor. Les LEDs, les diverses connexions électriques formant un circuit électrique et, le cas échéant, tout circuit électronique autre que les LEDs étant agencés sur le PCB et portés par celui-ci. Ainsi, le rotor porte la totalité de l'équipement électrique et électronique formé par la pluralité de diodes électroluminescentes, les bobines de la génératrice 88, le circuit électrique d'interconnexion et, le cas échéant, tout autre élément électrique ou électronique associé au dispositif d'éclairage et à la génératrice mécano-électrique qui l'alimente.

Le stator 90 comprend une première série d'aimants permanents bipolaires 18a, à aimantation axiale, qui sont portés inférieurement par une première partie 106a d'une structure annulaire ferromagnétique formant un circuit magnétique de fermeture des champs magnétiques de la première série d'aimants 18a et également de la deuxième série d'aimants permanents 18b portés supérieurement par la deuxième partie 106b de la structure annulaire, laquelle est fixe dans le mode de réalisation décrit ici, contrairement à la variante du premier mode de réalisation principal décrite précédemment où le rotor comprenait une structure annulaire semblable qui portait les deux séries d'aimants. La structure annulaire comprend des évidements 110, pour les roulements à billes 100a, 110b et 110c, et un évidement 120 pour la roue d'entrainement 75. Ces évidements sont usinés dans la paroi latérale (paroi axiale / verticale) et éventuellement, comme représenté, également dans la deuxième partie 106b (partie inférieure du côté du fond de la boîte) pour faciliter le montage des roulements à billes et de la roue d'entrainement 75.

Dans une première variante représentée à la figure 3, le nombre d'aimants de chaque série d'aimants est égal au nombre de bobines prévu, ce nombre étant trente-six dans la variante représentée. De manière avantageuse et non-limitative, ledit nombre est prévu entre vingt et quarante. Comme déjà exposé, dans une deuxième variante, la génératrice comprend deux fois plus d'aimants par série que de bobines, les aimants de chaque série ayant des polarités alternées.

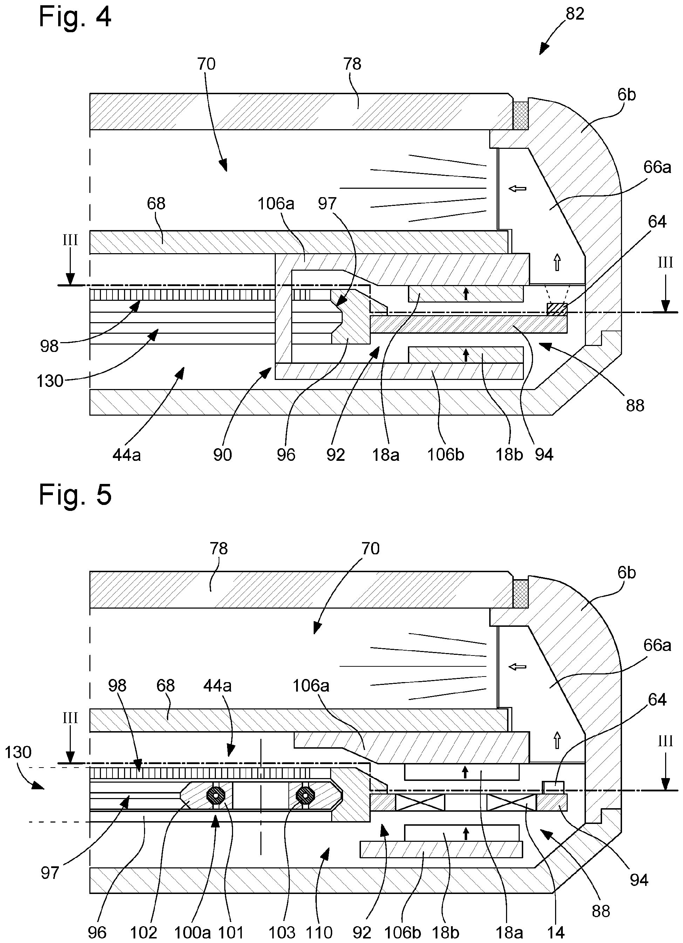

Le dispositif d'éclairage est associé à une structure guide de lumière 66a, similaire à celle décrite dans le deuxième mode de réalisation. La structure guide de lumière est agencée pour conduire la lumière produite par le dispositif d'éclairage, à savoir les LEDs 64, vers un espace d'affichage 70, dans lequel est situé un dispositif d'affichage analogique (non représenté) de la montre, l'espace d'affichage étant situé entre le cadran 68 et le verre supérieur 78. Selon une variante préférée représentée aux figures 4 et 5, la structure guide de lumière forme un rehaut de la montre entourant ledit espace d'affichage 70. La structure guide de lumière présente une surface annulaire inférieure, qui définit une surface d'injection de la lumière produite par les LEDs, et une surface cylindrique définissant latéralement l'espace d'affichage 70 et une surface d'extraction de la lumière. Le profil de la section transversale de la structure guide de lumière, en particulier la portion arrière, peut être optimisé pour guider efficacement la lumière vers la surface d'extraction. Les surfaces de la structure guide de lumière, en particulier la surface arrière, peuvent être traitées ou recevoir une ou plusieurs couches, notamment réfléchissantes. Dans la variante du mode de réalisation décrite ici, il est avantageux que les LEDs 64 soient situées du côté extérieur des bobines 14, étant donné que la structure guide de lumière forme un rehaut et est donc une pièce située à la périphérie du cadran 68.

Le mode de réalisation avantageux décrit ici présente un avantage majeur relativement à la variante du deuxième mode de réalisation principal décrite précédemment pour ce qui concerne l'éclairage de l'espace d'affichage 70. Cet avantage majeur vient du fait que les LEDs sont agencées sur le rotor et qu'elles tournent donc avec celui-ci. Ainsi, la surface cylindrique de la structure 66a, définissant le rehaut, est balayée par la lumière produite par chacune de LEDs selon une direction tangentielle perpendiculaire à l'axe de rotation 34, c'est-à-dire selon une direction angulaire. En prévoyant un nombre suffisant de LEDs, par exemple douze comme représenté à la Figure 3, et une vitesse de rotation du rotor qui soit suffisante, par exemple deux à quatre tours/ seconde, l'œil d'un utilisateur perçoit alors un éclairage quasi homogène et quasi stationnaire, puisque l'éclairage a lieu seulement lorsque la génératrice est activée et le rotor entrainé en rotation, l'énergie électrique engendrée étant fournie instantanément aux LEDs 64. Dans le deuxième mode de réalisation, les LEDs sont agencées sur le stator et elles demeurent stationnaires lorsqu'elles sont alimentées (rotor entrainé en rotation), de sorte qu'il est difficile, voire impossible de produire un éclairage angulairement homogène au travers de la surface cylindrique du rehaut. Dans ce dernier cas, notamment avec douze LEDs, on peut favoriser un éclairage de zones du cadran comprenant par exemple des marques ou chiffres indiquant les heures.

Dans une première variante, en lieu et place de la structure guide de lumière 66a, on peut avoir un espace vide au-dessus des LEDs qui est délimité par une surface réfléchissante, laquelle est configurée pour renvoyer au mieux les rayons de lumière en direction de l'espace d'affichage 70 et en particulier du cadran 68. L'espace d'affichage est avantageusement fermé par une pièce cylindrique au moins partiellement transparente à la lumière produite par les LEDs au moins dans la direction radiale allant vers l'espace d'affichage et donc vers l'axe de rotation central 34, cette pièce cylindrique étant traversée par la lumière qui est produite par les LEDs et réfléchie par ladite surface réfléchissante. Cette surface réfléchissante peut être définie par une surface intérieure de la boîte de montre ou par une pièce spécifique introduite dans cette boîte.

Dans une deuxième variante, il est prévu une structure guide de lumière, transparente pour la lumière produite par les LEDs, qui présente une surface d'extraction de la lumière agencée derrière un rehaut cylindrique formant une paroi cylindrique définissant l'espace d'affichage, ce rehaut cylindrique étant au moins partiellement transparent, pour la lumière des LEDs incidente sur ce rehaut cylindrique, en direction de l'espace d'affichage.

Finalement, dans un autre mode de réalisation d'une montre ayant une génératrice selon l'invention et dont le rotor est également supporté par une pluralité de roulements à billes du type décrit ci-avant dans le mode de réalisation avantageux, chaque roulement à billes est situé du côté extérieur du rotor et chaque partie fixe est fixée à la boîte de la montre.

## Revendications

1. Montre (2, 42, 82) comprenant un mouvement (4, 44), une génératrice mécano-électrique (8, 48, 88) et une boîte (6, 6a, 6b) incorporant le mouvement et la génératrice mécano-électrique, cette génératrice comprenant un stator (10, 50, 90) et un rotor (12, 52, 92), l'un portant des aimants permanents (18, 18a, 18b) et l'autre des bobines (14), les aimants permanents et les bobines étant agencés de manière que, lorsque le rotor est entraîné en rotation, les aimants permanents passent, dans un référentiel lié aux bobines, successivement au moins partiellement en face de chaque bobine avec leurs axes magnétiques respectifs traversant la bobine ; **caractérisée en ce que** le rotor présente une structure annulaire et est guidé en rotation par au moins un roulement à billes (20 ; 60 ; 100a, 100b, 100c), le rotor présentant sur toute sa hauteur un espace intérieur libre (24, 130), lequel est traversé par l'axe géométrique de rotation (34) de ce rotor et dans lequel est situé au moins partiellement le mouvement.

2. Montre selon la revendication 1, **caractérisée en ce que** le rotor (12, 52, 92) de la génératrice mécano-électrique est situé sensiblement entièrement, de préférence entièrement, dans un espace périphérique au mouvement (4, 44).

3. Montre selon la revendication 2, **caractérisée en ce que** le stator (50, 90) de la génératrice mécano-électrique est situé sensiblement entièrement, de préférence entièrement, dans un espace périphérique au mouvement (44).

4. Montre selon une quelconque des revendications précédentes, **caractérisée en ce que** la dimension axiale de la génératrice mécano-électrique (48) est inférieure à la dimension axiale du mouvement.

5. Montre selon une quelconque des revendications précédentes, **caractérisée en ce que** le roulement à billes (20, 60) est formé d'une partie fixe (21, 21a) et d'une partie mobile (22, 22a) entre lesquelles sont situées les billes (23), la partie mobile étant annulaire et cette partie mobile formant une partie du rotor ou étant solidaire du rotor.

6. Montre selon la revendication 5, **caractérisée en ce que** la partie fixe (21) du roulement à billes (20) est située du côté extérieur du rotor (12) et fixée à ladite boîte (6).

7. Montre selon la revendication 5, **caractérisée en ce que** la partie fixe (21a) du roulement à billes (60) est située du côté intérieur du rotor (52) et fixée audit mouvement (44).

8. Montre selon une quelconque des revendications 1 à 4, **caractérisée en ce que** cette montre (82) comprend une pluralité de roulements à billes (100a, 100b, 100c) dont le diamètre est inférieur au rayon intérieur (R) du rotor (92), de préférence inférieur à la moitié de ce rayon intérieur ; et **en ce que** chaque roulement à billes de ladite pluralité comprend une partie fixe (101) et une partie mobile (102) passant entre la partie fixe et le rotor, chaque partie mobile et le rotor étant configurés de manière que le rotor est supporté seulement par la pluralité des parties mobiles de la pluralité de roulements à billes et est capable de tourner autour dudit axe géométrique de rotation.

9. Montre selon la revendication 8, **caractérisée en ce que** chaque roulement à billes (100a, 100b, 100c) est situé du côté intérieur du rotor et chaque partie fixe est fixée audit mouvement.

10. Montre selon la revendication 8, **caractérisée en ce que** chaque roulement à billes est situé du côté extérieur du rotor et chaque partie fixe est fixée à ladite boîte.

11. Montre selon une quelconque des revendications précédentes, **caractérisée en ce que** le rotor (12) comprend un balourd (28) ou est solidaire d'un balourd, lequel permet un actionnement en rotation libre de ce rotor par des mouvements effectués par un utilisateur de la montre; et **en ce que** les bobines (14) sont connectées à un accumulateur électrique (32) via un redresseur (30).

12. Montre selon une quelconque des revendications 1 à 10, **caractérisée en ce qu'**elle comprend un dispositif mécanique (72, 74, 75) d'entrainement du rotor, ce dispositif mécanique d'entrainement comprenant un barillet (72) et étant agencé de manière à pouvoir être activé sur commande par un utilisateur de la montre.

13. Montre selon la revendication 12, **caractérisée en ce qu'**elle comprend un dispositif d'éclairage (64) qui est alimenté par les bobines.

14. Montre selon la revendication 13, **caractérisée en ce que** le stator (50) porte les bobines (14), lesquelles sont connectées, directement ou via un circuit électrique sans accumulateur, audit dispositif d'éclairage.

15. Montre selon la revendication 14, **caractérisée en ce que** le dispositif d'éclairage (64) est agencé fixement sur le stator.

16. Montre selon la revendication 13, **caractérisée en ce que** le rotor (92) porte les bobines (14), lesquelles sont connectées, directement ou via un circuit électrique sans accumulateur, audit dispositif d'éclairage (64) qui est agencé fixement sur le rotor.

17. Montre selon une quelconque des revendications 13 à 16, **caractérisé en ce que** le dispositif d'éclairage comprend ou est associé à au moins une structure guide de lumière (66, 66a) agencée pour conduire de la lumière produite par le dispositif d'éclairage (64) vers un espace d'affichage (70) dans lequel est situé un dispositif d'affichage analogique de la montre.

18. Montre selon la revendication 17, **caractérisée en ce que** la structure guide de lumière (66, 66a) forme un rehaut de la montre entourant ledit espace d'affichage (70) ou présente une surface d'extraction de la lumière agencée derrière un rehaut au moins partiellement transparent, à de ladite lumière incidente, en direction de l'espace d'affichage.
